# EUROPEAN PATENT SPECIFICATION

(11) **EP 1 590 800 B1**
(45) Date of publication and mention of the grant of the patent: **04.11.2009**
(21) Application number: 04706501.6
(22) Date of filing: 29.01.2004
(51) Int. Cl.: G10L 19/00, H04L 1/22

(54) **CONTINUOUS BACKUP AUDIO**
KONTINUIERLICHE AUDIODATENSICHERUNG
SYSTEME AUDIO AUXILIAIRE CONTINU

(30) Priority: 06.02.2003 US 445537 P
(43) Date of publication of application: 02.11.2005
(73) Proprietor: DOLBY LABORATORIES LICENSING CORPORATION, San Francisco California 94103-4813 (US)
(72) Inventor: TODD, Craig Campbell, San Francisco, CA 94103 (US); TRUMAN, Michael, Mead, Missouri City, TX 77459 (US); CUTLER, Julia, Ruth, San Francisco, CA 94103 (US)
(74) Representative: Hoffmann, Eckart
(86) International application number: PCT/US2004/002528
(87) International publication number: WO 2004/073178

(56) References cited:
- EP-A2- 0 989 543
- FR-A- 2 820 573
- US-A- 5 559 891
- US-B1- 6 263 371
- CHENG-CHIEH LEE: "Diversity control among multiple coders: a simple approach to multiple descriptions" IEEE, 17 September 2000 (2000-09-17), pages 69-71, XP010520044

## Description

### TECHNICAL FIELD

The invention relates generally to digital audio systems. In particular, the invention relates to a backup (*i.e*., alternative) digital audio system for use, for example, in a digital television system, wherein the audio system switches between the main and backup audio without time discontinuities or annoying audible artifacts. Although a preferred embodiment of the invention is described in connection with a particular digital television standard, the invention is more broadly applicable to any digital audio system that employs main and backup digital audio. Aspects of the present invention include digital audio encoding methods, digital audio decoding methods, digital audio encoders, digital audio decoders and a machine-readable medium, having encoded thereon program code, wherein, when the program code is executed by a machine, the machine implements a digital audio decoding method.

### BACKGROUND ART

The current ATSC (Advanced Television Systems Committee) Standard for DTV (digital television) in the United States uses an audio coding system hereinafter referred to as "AC-3" perceptual coding described in Digital Audio Compression Standard (Dolby AC-3), Document A/52, Advanced Television Systems Committee, Approved 10 November 1994. (Rev 1) Annex A added 12 April 1995. (Rev 2) corrigenda added 24 May 1995. (Rev 3) Annex B and C added 20 Dec 1995. A revision to A/52A on 20 Aug. 2001 removed annex B, renumbered Annex C to Annex B, added a new Annex C, and corrected a number of errata. The A/52A document is available on the World Wide Web at http://www.atsc.org/Standards. See also "Design and Implementation of AC-3 Coders," by Steve Vernon, IEEE Trans. Consumer Electronics, Vol. 41, No.3, August 1995. "Dolby" is a trademark of Dolby Laboratories Licensing Corporation.

New ATSC Standards and revisions to the existing Standards are being considered to provide a reliable backup or "robust" transmission system for audio and/or video. A more robust audio and/or video backup system would provide backup for the main system when an uncorrectable error or omission occurs in the main audio or video data. This may occur, for example, when the SNR (signal-to-noise ratio) of the RF signal carrying the audio/video data is insufficient as might arise in the case of weak signal strength due to poor reception, short bursts of interference or for difficult reception environments such as mobile receivers.

To be useful, a robust transmission system should be receiving reliably, even in the presence of signal degradations that corrupt the main audio data, causing errors or omissions in the main audio data that cannot be inaudibly corrected. There are many known techniques for detecting uncorrectable errors and omissions in audio data. Likewise, there are many known methods for making a signal more robust including using a lower data rate modulation scheme to make the bits more distinct from noise or using more powerful error correction. Such techniques reduce the transmission efficiency of the robust backup system. Therefore, data transmitted in a robust backup system typically costs more in terms of bandwidth per bit than data transmitted in a main channel.

Although the manner in which the backup transmission system audio and/or video achieves robustness is not a part of the present invention, an aspect of the present invention is the selection of an audio coding technique for the robust data that reduces its bit cost, particularly the selection of an audio coding technique that is appropriately related to the audio coding technique applied to the main data such that the two audio coding techniques allow the main and robust audio signals to be "synchronized" (as explained below) so that it is possible to switch or fade between the main and robust audio reproduction with a minimum of disturbance and with no time gap or overlap in the reproduced audio and, desirably, to share devices and/or functions, or portions thereof, for recovering the main and robust audio signals.

Because the data transmitted by the robust system requires more bandwidth than data transmitted by the main system in the new or modified ATSC Standard, the need to minimize bits required by a backup audio system is a factor that influences its characteristics and configuration. Because, compared to the main transmission system, the robust backup transmission system requires more RF bandwidth to carry an equivalent amount of data, the audio system for the robust backup system should be as efficient as possible, which suggests that backup audio should be carried by a more efficient audio coding system than the coding system of the main audio and/or should have fewer channels than the main audio. A further requirement is that the reproduced audio should be able to transition between the main and backup audio with no time discontinuities (no time gaps that result, for example, in repeated or missing syllables in speech) or annoying audible artifacts (no ticks or pops, for example). Some changes in soundfield may necessarily result when the main and backup audio systems do not carry the same directional channels.

The document FR 2 820 573 A relates to an audio signal processing device that can receive numerous input audio streams and supply an output audio stream from the input audio streams. An input audio stream ("the first stream") may have missing data. The device decides whether to regenerate the data missing from the first stream using a characteristic from a second input audio stream.

The document Cheng-Chieh Lee, "Diversity Control Among Multiple Coders: A Simple Approach to Multiple Descriptions," IEEE, September 17, 2000 (2009-09-17), pages 69-71, teaches a voice-communication arrangement in which multiple codec pairs coordinate to provide diversified descriptions of a source signal. The Cheng-Chieh Lee apparatus allows the system to mitigate channel erasures that may occur while providing better quality in the absence of channel impairments. To maintain backward compatibility, the arrangement modifies the legacy encoder such that the legacy decoder need not be modified. If multiple channels work, the information from each channel augments the information from other channels to improve fidelity. If only one channel works, the information received is sufficient for minimum fidelity. To avoid a state-divergence problem, separate codecs are allocated for each channel and coordinated to produce diversified information. In the receiver, should one channel fail, the associated decoder temporarily stops operating. Otherwise, it operates normally. Output signals from all operating decoders are mixed to produce the final decoded signal.

However, the Cheng-Chieh Lee apparatus does not relate to multichannel sound encoding (spatial audio).

### DISCLOSURE OF THE INVENTION

The object of the present invention is achieved with a digital audio decoding method, a machine-readable storage medium storing a program and apparatus as claimed in the independent claims, respectively. Preferred, embodiments of the invention are defined in the dependent claims.

In accordance with aspects of the present invention, the main audio system may be encoded with a standardized coding system having a large installed user base, such as the AC-3 perceptual coding system, and a backup digital audio system may be encoded with a modified or related version of the standardized coding system, such as a modification of the AC-3 perceptual coding system. Alternatively, the main audio system may be encoded with another coding system, for example, the MPEG-2 AAC or the mp3 (MPEG-Layer3) perceptual coding system and the backup audio system may be encoded with a modification of that other coding system, for example, a related version of AAC or mp3 having Spectral Band Replication (SBR), such as the aacPLUS or the mp3PRO coding system, respectively. See, for example, "Spectral Band Replication, a novel approach in audio coding" by Kietz, Liljeryd, Kjörling and Kunz, Audio Engineering Society Convention Paper 5553, AES 112th Convention, Munich, May 10-13, 2002; "Enhancing audio coding efficiency of MPEG Layer-2 with Spectral Band Replication for DigitalRadio (DAB) in a backwards compatible way" by Gröschel, Beer and Henn, Audio Engineering Society Convention Paper 5850, AES 114th Convention, Amsterdam, March 22-25, 2003; "State-of-the-Art Audio Coding for Broadcasting and Mobile Applications" by Ehret, Dietz and Kjörling, Audio Engineering Society Convention Paper 5834, AES 114th Convention, Amsterdam, March 22-25, 2003; and "Enhancing mp3 with SBR: Features and Capabilities of the new mp3PRO Algorithm" by Ziegler, Ehret, Ekstrand and Lutzky, Audio Engineering Society Convention Paper 5560, AES 112th Convention, Munich, May 10-13, 2002.

The backup coding system should be a modification of the main coding system at least to the extent that "corresponding pairs of self-contained data units" (as defined below) in each of the main and backup coding systems, respectively, are capable of representing the same set of PCM audio data samples (*i.e*., they represent the same underlying audio, but not necessarily with the same spatial resolution — it may represent the directional characteristics of the underlying audio with less detail). Preferably, the main and backup coding systems have some common characteristics such that each does not require its own separate decoder or decoding function so that at least a portion of a decoder or decoding function can be shared in the decoding of the main and backup audio.

Although corresponding pairs of self-contained data units in the encoded main and backup audio should represent the same underlying audio, a self-contained data unit in the main audio information need not have the same number of bits as the corresponding self-contained data unit in the backup or robust audio information. Typically, a data unit in the robust audio information may have fewer bits than its corresponding data unit in the main audio information because, for example, it may represent the underlying audio more efficiently and/or because it may represent the directional characteristics of the underlying audio with less detail (fewer channels).

By "self-contained" is meant that each data unit contains sufficient information so that it can be decoded or transcoded without data from another data unit. In principle, each such data unit may contain multiple data subunits, each of which is self-contained. In practical embodiments of the present invention, the smallest self-contained data units are employed. In the case of AC-3 encoded audio information, the smallest self-contained data unit is a frame.

"Corresponding" pairs of self-contained data units produced by the main and robust audio encoding systems may be identified by their position with respect to each other or with respect to other data (such as video data) within one or more data streams (for example, a composite data stream into which the main and backup audio data streams have been multiplexed might alternate main and robust audio data units so that corresponding data units follow one another, or an audio data unit might be associated in a known way with a video frame) and/or by affixing an identifier to each self-contained audio data unit. For example, a time stamp may be affixed to each main self-contained audio data unit so that its corresponding backup audio data unit can be identified.

Based on their identification, corresponding pairs of self-contained audio data units in the main and backup audio information can be made "synchronous," in a decoding device or process. Such "synchronism" requires the simultaneous availability of corresponding main and robust audio data units in the decoder or decoding process in order to allow a switch or fade between the two without time discontinuities or annoying audible artifacts in the reproduced audio.

Simultaneous availability may be achieved by having a suitable number of corresponding data units in a data store so that the selected one of each pair of corresponding data units can be read out at appropriate times. This normally occurs in modem packet-based data systems, which employ buffering.

Corresponding data units of main and robust audio, need not be conveyed in synchronism nor received in synchronism by the decoder or decoding function (typically, corresponding data units are received at slightly different times and are stored in memory) so long as corresponding self-contained data units are available to the decoder or decoding process, are identifiable and can be put into "synchronism" at a notional switching point where the decoder or decoding process switches back and forth between the main and robust audio. Of course, when the corresponding data unit of the main audio is corrupted or missing, only the robust audio data unit may be present at the notional switching point.

Corresponding pairs of data units, representing the same set of PCM samples (underlying audio), are identified (explicitly or implicitly) when the PCM samples are encoded so that corresponding data units can be conveyed, most likely out of synchronism during actual transmission, to a decoder or decoding function. In the course of such conveying, the corresponding data units may be stored in one or more memories in which synchronism has no meaning. In a near real-time system, such as the digital television environment described below, the conveyance of corresponding and robust data units should not introduce any significant additional latency.

Another desirable capability of a backup ATSC audio system is the ability to provide, for example, an encoded AC-3 audio bitstream to an external decoder, such as a home A/V (audio/video) receiver. Often, the home A/V receiver is where the main audio system is reproduced in 5.1 channels for surround sound. The more different the backup audio system is from the main audio system, the more complex and expensive it would be to maintain a continuous AC-3 bitstream output to external decoders. Doing so would require an AC-3 encoder, which is complex and expensive.

In the case in which the main audio is encoded with AC-3 coding, the backup audio preferably is encoded with a modification of AC-3 coding. Modifications may include, for example, but are not limited to, various techniques for regenerating or replicating portions of the spectrum known as "high frequency regeneration" (HFR) and "spectral band replication" (SBR). Such techniques can significantly reduce the data rate with only minor modification to the AC-3 system, resulting in minor additional complexity.

A description of known methods for HFR can be found in Makhoul and Berouti, "High-Frequency Regeneration in Speech Coding Systems," Proc. of the Intl. Conf. on Acoust., Speech and Signal Proc., April 1979. Improved spectral regeneration techniques for encoding high-quality music are described in United States Patent Applications S.N. 10/113,858, filed March 28, 2002, entitled "Broadband Frequency Translation for High Frequency Regeneration;" S.N. 10/174,493, entitled Audio Coding System Using Spectral Hole Filling, filed June 17, 2002; S.N. 10/238,047, entitled "Audio Coding System Using Characteristics of a Decoded Signal to Adapt Synthesized Spectral Components," filed September 6, 2002; and S.N. 10/434,449, entitled "Improved Audio Coding Systems and Methods Using Spectral Component Coupling and Spectral Component Regeneration," filed May 8, 2003, each of which is hereby incorporated by reference in its entirety.

A description of aspects of SBR can be found in ones of the above-cited Audio Engineering Society Convention Papers.

Additional techniques, such as applying entropy coding (*e.g*., arithmetic or Huffman coding) (sometimes referred to as "lossless" coding) to some of the bitstream information produced by the modified AC-3 coding, may also be used to reduce the data rate with some increase in complexity. For example, a simple Huffman coding scheme may be applied to the modified AC-3 bitstream exponents to reduce their transmission cost.

The modified form of the AC-3 main audio system employed for the backup audio may also include certain other information in its bitstream, which information is usable by a low complexity transcoder, as mentioned below.

An advantage of using a modified, more efficient version of the AC-3 audio system to create the robust backup audio bitstream is that it can minimize the increase in decoder complexity. For example, as explained below, a modified version of an AC-3 audio decoder can be used to decode both the main audio and the robust audio bitstream, eliminating the need for separate decoders for the main and robust audio.

Conventional transcoding techniques have disadvantages when they are used to convert signals that are encoded by perceptual coding systems. One disadvantage is that conventional transcoding equipment is relatively expensive because it must implement complete decoding and encoding processes. A second disadvantage is that the perceived quality of the transcoded signal after decoding is almost always degraded relative to the perceived quality of the input encoded signal after decoding.

Although a conventional prior art transcoder of the type that decodes and re-encodes may be employed, in order to reduce the complexity and cost, a transcoder having a low-complexity portion may be used advantageously to convert the robust backup audio bitstream into an AC-3 compliant bitstream for use with external AC-3 decoders. By "AC-3 compliant data stream or bitstream" herein is meant that the "compliant" bitstream can be decoded by a standard AC-3 decoder (although such a "compliant" bitstream may require formatting in order to satisfy the requirements of an S/PDIF, Toslink, or other coupling interface). A transcoder having a low-complexity portion is described in United States Patent Application S.N. 10/458,798 entitled "Conversion of Synthesized Spectral Components for Encoding and Low-Complexity Transcoding," filed June 9, 2003, which application is hereby incorporated by reference in its entirety. According to the method and apparatus of that application, the conversion is performed in a relatively low complexity operation along with minimal transcoding quality loss.

The transcoder described in the said S.N. 10/458,79 application eliminates some functions from the transcoding process such as analysis and synthesis filtering that is required in conventional encoders and decoders. In its simplest form, transcoding according to the application performs a partial decoding process only to the extent needed to dequantize spectral information and it performs a partial encoding process only to the extent needed to re-quantize the dequantized spectral information. The transcoding process is further simplified by obtaining control parameters needed for controlling dequantization and requantization from the encoded signal.

Other forms of low-complexity transcoders may be employed in various embodiments of the invention. Such low-complexity encoders may include those described in "ATLANTIC: Preserving video and audio quality in an MPEG-coded environment" by N.D. Wells and N.H.C. Gilchrist, ATLANTIC Technical Papers 1197-1998 and three papers presented at the 109th Convention of the Audio Engineering Society, September 22-25, 2000: "Transport of Context-Based Information in Digital Audio Data" by Natalie Peckham and Frank Kurth, Preprint No. 5250; "Analysis of Decompressed Audio - The Inverse Decoder" by Jürgen Herre and Michael Schug, Preprint No. 5256; and "A Dynamic Embedding Codec for Multiple Generations Compression" by Frank Kurth and Viktor Hassenrik, Preprint No. 5257.

The various features of the present invention and its preferred embodiments may be better understood by referring to the following discussion and the accompanying drawings in which like reference numerals refer to like elements in the several figures. The contents of the following discussion and the drawings are set forth as examples only and should not be understood to represent limitations upon the scope of the present invention.

### DESCRIPTION OF THE DRAWINGS

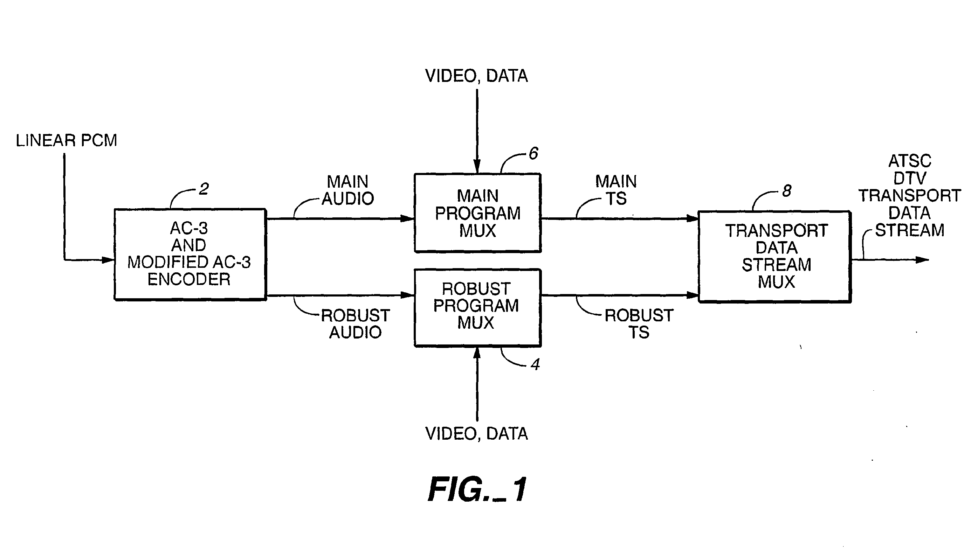

FIG. 1 is a functional and schematic block diagram of an encoder or an encoding process in which linear PCM encoded audio information comprising PCM audio data samples are encoded with a first type of digital audio coding, the encoded first audio information having self-contained data units, and with a second type of digital audio coding, the encoded second audio information also having self-contained data units. Corresponding pairs of self-contained data units encoded with the first type and second type of digital audio coding represent the same PCM audio data samples, such that the first and second encoded audio information represent the same underlying audio information.

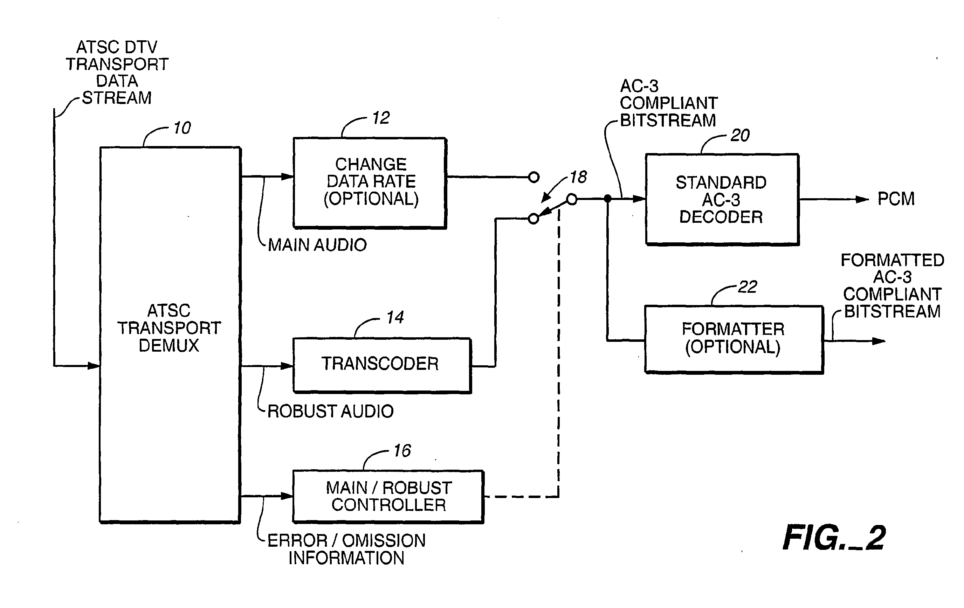

FIGS. 2 through 4 show functional and schematic block diagrams of decoder or decoding process arrangements for providing a PCM audio output and/or an encoded audio output complying with a first type of digital audio coding in response to first and second audio information encoded, respectively, with first and second type of audio coding and in response to the detection of errors and omissions in the first audio information.
FIG. 2 is a functional and schematic block diagram of a decoder or decoding process showing a basic arrangement for providing a PCM output and/or an AC-3 compliant bitstream output in response to an ATSC transport stream carrying multiplexed AC-3 (main channel) and modified AC-3 (robust channel) bitstreams.

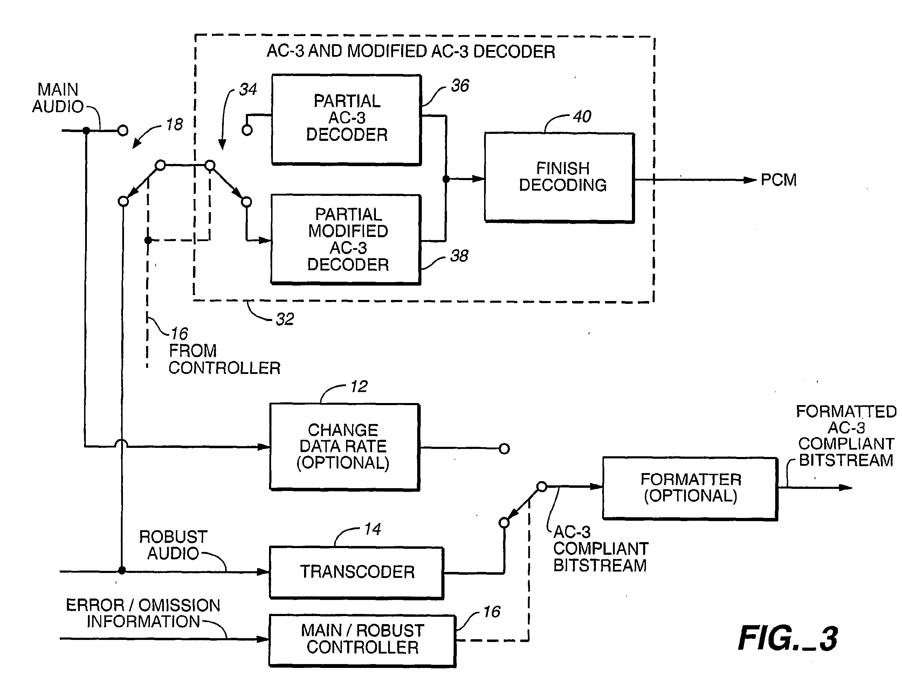

FIG. 3 is a functional and schematic block diagram of a decoder or decoding process showing a further arrangement for providing a PCM output and/or an AC-3 compliant bitstream output in response to an ATSC transport stream carrying multiplexed AC-3 (main channel) and modified AC-3 (robust channel) bitstreams. The arrangement of FIG. 3 is less complex than that of FIG. 2 - it avoids degradation that may result from a series transcoder/decoder arrangement and it eliminates certain duplicated decoder functions.

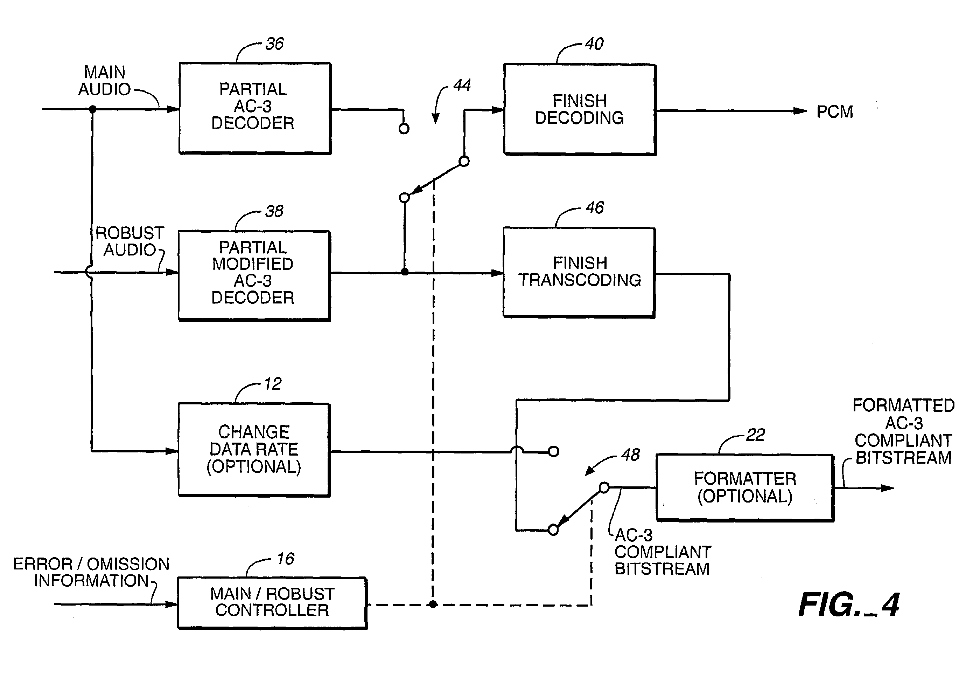

FIG. 4 is a functional and schematic block diagram of a decoder or decoding process showing yet a further arrangement for providing a PCM output and/or an AC-3 compliant bitstream output in response to an ATSC transport stream carrying multiplexed AC-3 (main channel) and modified AC-3 (robust channel) bitstreams in which there is a further sharing of certain functions or devices in order to economize on hardware and/or processing power.

### BEST MODE FOR CARRYING OUT THE INVENTION

FIG. 1 shows a functional and schematic block diagram of an encoder or an encoding process in which linear PCM encoded audio information comprising PCM audio data samples are received. That audio information is encoded with a first type of digital audio coding, the encoded first audio information having self-contained data units, and with a second type of digital audio coding, the encoded second audio information also having self-contained data units. Corresponding pairs of self-contained data units encoded with the first type and second type of digital audio coding represent the same PCM audio data samples, such that the first and second audio information represent the same underlying audio information.

More specifically, FIG. 1 shows a functional and schematic block diagram of an arrangement in an ATSC television environment for generating a main transport data stream ("Main TS") carrying main audio, video, data, and synchronization information and a robust transport data stream ("Robust TS") carrying robust audio, video, data, and synchronization information. An appropriate robust audio and/or video backup system can provide backup for the main system when an uncorrectable error or omission occurs in the main audio or video data. The details of the video and data information generation are beyond the scope of the present invention and are not shown.

Linear PCM (pulse code modulation), typically representing 5.1 channels of audio (left, center, right, left surround, right surround and a low-frequency effects channel), is applied to an audio encoder or encoding function ("AC-3 and modified AC-3 encoder") 2. The encoder provides two encoded audio outputs, which may be in the form of data streams — a main AC-3 compliant data stream and a robust modified ("extended") AC-3 data stream. Each data stream is broken into frames, which constitute self-contained data units, as described above. Corresponding pairs of frames in the two data streams represent the same PCM samples.

Each of the AC-3 compliant and modified AC-3 compliant bitstreams may represent one or more audio channels. Typically, the main stream represents 5.1 channels of audio. The robust stream may represent, for example, a single ("monophonic" or "mono") audio channel, two channels of matrix encoded audio, or 5.1 channels of audio as in the main stream. The encoded main AC-3 audio data may be multiplexed with video and other data in a main program multiplexer or multiplexing function ("Main Program MUX") 4 in order to provide the main transport data stream (TS). Similarly, the encoded robust audio data may be multiplexed with video and other data in a robust program multiplexer or multiplexing function ("Robust Program MUX") 6 to provide the robust transport data stream. The main transport data stream and the robust transport data stream are subsequently multiplexed together in a transport data stream multiplexer or multiplexing function ("Transport Data Stream MUX") 8 to form an ATSC DTV transport data stream.

FIGS. 2 through 4 show functional and schematic block diagrams of decoder or decoding process arrangements for providing a PCM audio output and/or an encoded audio output complying with a first type of digital audio coding in response to first and second audio information encoded, respectively, with first and second type of audio coding and in response to the detection of errors and omissions in the first audio information. Although the arrangements are described in the environment of ATSC television in which the first and second audio information are AC-3 and modified AC-3 encoded, it will be understood that the principles of the invention are more broadly applicable as indicated herein.

In FIGS. 2 through 4, arrangements are shown for providing a decoded (PCM) output and/or an AC-3 compliant bitstream output in response to an ATSC transport stream carrying multiplexed AC-3 (main channel) and modified AC-3 (robust channel) bitstreams. The transport system and/or the audio system may determine if the main program channel data stream has uncorrectable errors or omissions. An omission, for example, may include, for example, a complete loss of data in the main audio data stream. Various techniques for detecting uncorrectable errors or omissions in an encoded audio data stream are well known in the art and the use of a particular one is not critical to the invention. If the main data stream has an uncorrectable error or omission, a controller causes decoding of the robust program channel. Otherwise, the controller causes decoding of the main program channel. The output of the decoder or decoding process may be either a PCM audio bitstream or an AC-3 compliant bitstream or both. The AC-3 compliant bitstream may require formatting in order to satisfy the requirements of an S/PDIF, Toslink, or other coupling interface.

The arrangement of FIG. 2 illustrates the basic principles of a decoder or decoding arrangement according to aspects of the invention. Less complex, less duplicative arrangements are shown in the alternative embodiments of FIGS. 3 and 4.

Referring more specifically to the details of FIG. 2, an "ATSC Transport DEMUX" (a demultiplexer or demultiplexer function) 10 receives an ATSC transport data stream and provides main (AC-3) and robust (modified AC-3) digital audio data stream outputs in addition to video and data outputs (the video and data outputs are beyond the scope of the present invention). The main (AC-3) data stream is applied to an optional data rate changing device or function ("change data rate") 12 for changing (typically, increasing) the main AC-3 data rate. The main AC-3 data rate in an ATSC system (384 or 444 kb/s) is less than the maximum AC-3 data rate (640 kb/s). In order to match a transcoder output data rate, as described below, it may be desirable to increase the main AC-3 data rate to 640 kb/s. As is well known, this may be accomplished, for example, by padding the data in such a way as not to reduce the audio quality (for example, by repacking the existing quantized coefficients into a bitstream with a higher bit rate).

The robust (modified AC-3) data stream is applied to a transcoder or transcoding function ("transcoder") 14 that transcodes or converts the modified AC-3 robust audio to an AC-3 compliant bitstream. Preferably, transcoder 14 transcodes the modified AC-3 data rate, which may be, for example, 96 kb/s, to the maximum standard AC-3 bit rate (640 kb/s). The maximum standard AC-3 bit rate is used in order to minimize transcoding degradation.

A controller or controller function ("main/robust controller") 16 may receive explicit error information from the ATSC transport DEMUX 10, informing the controller when the main audio is corrupted (has an uncorrectable error or omission) and that the robust audio should be selected instead of the main audio. Alternately, omissions could be detected in a further process or processor (not shown) when data is not delivered by the transport demux when it is expected. Various ways of implementing data error or omission detectors or detecting processes are well known in the art. For example, if the main audio is AC-3 coded audio, the data integrity may be checked using one or both of the CRC words embedded in each AC-3 frame. If either CRC word checks, the bitstream may be presumed to be usable to a reasonable degree of certainty. If a higher degree of certainty is required, the detector may require that both CRC words check in each frame and/or that the CRC words in multiple frames check.

Controller 16 controls a switch or switching function ("switch") 18 to cause the switch to select robust audio transcoded to AC-3 audio from transcoder 14 or the main AC-3 audio (possibly with its data rate changed) depending on whether the main audio is corrupted or not available. Switch 18, as well as all switches and switching functions in the various embodiments of FIGS. 2 through 4 may be implemented in various known ways. A likely "switch" implementation is in software. The switch 18 output, an AC-3 compliant bitstream, may be applied to a standard AC-3 decoder or decoding function ("standard AC-3 decoder") 20, which provides a linear PCM audio output, and/or to an optional formatter or formatting function ("formatter") 22 that formats the AC-3 compliant bitstream to satisfy the requirements of an S/PDIF, Toslink, or other coupling interface for application to an external decoder. A television set, for example, may not have such an AC-3 compliant bitstream output, whereas a "set top box" (typically, a converter device receiving a cable and/or satellite input) likely would have. If only such an AC-3 compliant bitstream is desired, the decoder 20 is not required. If only a linear PCM output is desired, the optional formatter 22 is not required.

As mentioned above, it is desirable that the data rate of the AC-3 compliant bitstream is the same whether switch 18 selects the main audio or the transcoded robust audio. A constant input data rate to the standard AC-3 decoder 20 assures that the decoder is less likely to have a disruption in its decoded PCM output. It also assures that it is less likely for an external AC-3 decoder receiving the optionally formatted AC-3 compliant bitstream to malfunction.

For the purpose of saving processing power, certain devices or functions in the arrangements of FIGS. 2 through 4 may be made inactive when one or the other of the main and robust audio is selected. For example, in the arrangement of FIG. 2, when switch 18 selects the main audio, the transcoder 14 may be inactive. Similarly, when switch 18 selects the robust audio, the optional change data rate 12 may be inactive. Such activity and inactivity may be controlled, for example, by a controller such as controller 16.

Referring again to FIG. 2, although a prior art transcoder of the type that decodes and re-encodes may be employed to provide the basic functions of transcoder 14, in order to reduce the complexity and cost, a transcoder having a low-complexity portion as described in said United States Patent Application S.N. 10/458,798 may be employed to convert the robust backup audio bitstream into an AC-3 compliant bitstream for use with an AC-3 decoder.

In addition to providing transcoding functions, the transcoder 14 may, if necessary, also provide some degree of channel formatting in order to make the robust audio more compatible with the format of the 5.1 channel AC-3 main audio. For example, if the robust audio is only one channel of audio *(i. e.,* it is monophonic or "mono"), the transcoder may also apply that mono channel to the left, center and right AC-3 channels, so that, when decoded, the reproduced sound does not collapse to a single channel. Alternatively, if, for example, the robust audio is two channels of matrix-encoded audio representing four channels (left, center, right and surround), the two matrix-encoded channels may be transcoded as a two-channel bitstream or matrix decoded and inserted as a multichannel bitstream (along with optional bass enhancement). The robust audio may be 5.1 channels, as in the main AC-3 channels, in which case no format conversion would be required.

FIG. 3 shows a second arrangement for providing a decoded (PCM) output and/or an AC-3 compliant bitstream output in response to an ATSC transport stream carrying multiplexed AC-3 (main channel) and modified AC-3 (robust channel) bitstreams. The arrangement of FIG. 3 is less complex than that of FIG. 2 - it avoids degradation that may result from a series transcoder/decoder arrangement and it eliminates certain duplicated decoding functions.

In the arrangements of FIGS. 3 and 4, an ATSC transport demultiplexer 10, as in FIG. 2, may be employed, but is not shown for simplicity. As in FIG. 2 a further data error or omission detectors or detecting processes may be employed if, for example, such error information is not provided by the demultiplexer 10. Referring to FIG. 3, a decoder or decoding function ("AC-3 and modified AC-3 decoder") 32 decodes to linear PCM either the AC-3 encoded main audio stream or the modified AC-3 encoded robust audio stream. The decoder 32 may be configured as including a partial AC-3 decoder or decoding function ("AC-3 partial decoder") 36, a partial modified AC-3 decoder or decoding function ("modified AC-3 partial decoder") 38, a finish decoding function or device ("finish decoding") 40 coupled to partial decoders 36 and 38 and a switch or switching function ("switch") 34 that either couples the main audio to the AC-3 partial decoder 36 or couples the robust audio to the modified AC-3 partial decoder 38. Partial decoding 36 may perform AC-3 decoding up to a particular point in the decoding process, for example, through the performance of inverse quantization. Partial decoding 38 performs decoding of the modified AC-3 bitstream to the same point, for example, through the performance of inverse quantization. In either case, finish decoding 40 provides the remaining decoding functions that are not provided by partial decoding 36 and 38. For example, if the partial decoding 36 and 38 each decode through the performance of inverse quantization, the finish decoding 40 performs the inverse transformation followed by certain other functions normally performed in an AC-3 decoder such as dynamic range control, downmixing, etc. in order to provide a decoded PCM output. As may be necessary, finish decoding 40 may also perform some degree of channel formatting as discussed above. Note that the information passed between a partial decoding, such as partial decoding 36 or 38, and the finish decoding 40 may be other than a serial bitstream — it may be, for example quantized coefficients.

A controller 16, as in FIG. 2, receives error information from the ATSC transport DEMUX 10, informing it when the main audio is corrupted and that the robust audio should be selected. In that case, controller 16 controls a switch or switching function ("switch") 30 to cause the decoder 32 to receive the robust audio as its input and it controls switch 34 to cause the modified AC-3 partial decoder 38 to receive the robust audio input. When the main audio is not corrupted, controller 16 causes switches 30 and 34 to apply the main audio to the AC-3 partial decoder 36. The robust audio is also applied to a transcoder 14, as in FIG. 2, that transcodes or converts the robust audio to an AC-3 compliant bitstream. Controller 16 also controls a switch or switching function ("switch") 42 to cause an optional formatter 22, as in FIG. 2, to select the transcoder 14 output when the main audio is corrupted or the main audio (possibly with a changed data rate) when it is not corrupted, for application to an external decoder. If only such an AC-3 compliant bitstream is desired, neither the decoder 32 nor the switch 30 is required. If only the linear PCM output is desired, none of the change data rate 12, the transcoder 14, the switch 42 or the optional formatter 22 is required.

As discussed above in connection with the FIG. 2 arrangement, transcoder 14 may have a low-complexity portion as described in United States Patent Application S.N. 10/458,798. In addition, as discussed above in connection with the FIG. 2 arrangement, transcoder 18 may also provide some degree of channel formatting in order to make the robust audio more compatible with the format of the 5.1 channel AC-3 main audio.

The arrangement of FIG. 3 shows some sharing of decoding functions (finish decoding 40). Further sharing of certain functions or devices is possible in order to economize on hardware and/or processing power. FIG. 4 shows conceptually one such further sharing arrangement.

The main audio bitstream is applied to an AC-3 partial decoding 36, as in FIG. 3, and the robust audio bitstream is applied to a modified AC-3 partial decoding 38, as in FIG. 3. In response to error information, main/robust controller 16, as in FIG. 3, causes switch or switching function ("switch") 44 to select information from partial decoder 38 when the main audio is corrupted or the partially decoded main AC-3 information from partial decoder36 when it is not. In either case, switch 44 couples partial decoding information to a finish decoding 40, as in FIG. 3, that provides the remaining decoding functions that are not provided by partial decoding 36 or 38 in order to provide a PCM output.

The information from modified AC-3 partial decoder 38 is coupled to a finish transcoding function or device ("finish transcoding") 46, which, in combination with partial decoding 38, constitutes or functions as a transcoder, such as transcoder 14 of FIGS. 2 and 3. As does the transcoder 14 in FIG. 3, finish transcoding 46 may also perform some degree of channel formatting in order to make the robust audio more compatible with the format of the 5.1 channel AC-3 main audio, as mentioned above.

The robust data stream may have a data rate that differs from the highest conventional AC-3 data rate. For example, it may have a lower data rate such as 96 kb/s. When the data rate is different, a function of the finish transcoding 46 is to convert the robust stream's data rate to the highest AC-3 data rate, 640 kb/s. Other differences between the robust audio and AC-3 audio may be handled by partial decoding 38. If the combination of partial decoding 38 and finish transcoding 46 constitutes a low-complexity transcoder such as discussed above, using information provided by the audio encoder 2 (FIG. 1), the finish transcoding 46 may perform bit allocation, quantize and pack data into an AC-3 compliant bitstream.

Controller 16 also controls a switch or switching function ("switch") 48 to cause an optional S/PDIF, Toslink or other digital output formatter function or device 22 to select the finish transcoding 46 output when the main audio is corrupted (otherwise it selects the main data stream via an optional change data rate 12, as in FIGS. 2 and 3).

Note that the information passed between a partial decoding, such as partial decoding 36 or 38, and the finish decoding 40 or the finish transcoding 46 may be other than a serial bitstream - it may be, for example quantized coefficients.

If only an AC-3 compliant output is desired, neither the AC-3 partial decoding 36, finish decoding 40, nor the switch 44 are required. If only a PCM output is desired, none of the change data rate 12, finish transcoding 46, switch 48 or formatter 22 is required.

It will be apparent to those of ordinary skill in the art that certain details of the disclosed embodiments may be varied without changing the principles of operation. For example, additional switches or switching functions may be employed to disconnect inputs to devices or functions that are idle when one or the other of the main and robust inputs are selected and/or switches or switching functions might be omitted such that the same result is obtained by turning off non-selected devices or functions. In addition, functions may be shared differently than described among designated devices or functions. For example, when the robust input is selected, the formatter 22 could receive from transcoder 14 or finish transcoder 46 data from which it generates an AC-3 bitstream rather than receiving an AC-3 bitstream. As another example, formatter 22 could perform the function of change data rate 12. Other variations will be apparent to those of ordinary skill in the art.

The present invention may be implemented in a wide variety of ways. Analog and digital technologies may be used as desired. Various aspects may be implemented by discrete electrical components, integrated circuits, programmable logic arrays, ASICs and other types of electronic components, and by devices that execute programs of instructions, for example. Programs of instructions may be conveyed by essentially any device-readable media such as magnetic and optical storage media, read-only memory and programmable memory.

Software implementations of the present invention may be conveyed by a variety of machine readable media such as baseband or modulated communication paths throughout the spectrum including from supersonic to ultraviolet frequencies, or storage media that convey information using essentially any recording technology including magnetic tape, cards or disk, optical cards or disc, and detectable markings on media like paper.

## Claims

1. A digital audio decoding method, comprising
receiving
- first audio information encoded with a first type of digital audio coding and
- second audio information encoded with a second type of audio coding,
wherein the first audio information and the second audio information have self-contained data units, i.e., data units containing sufficient information so that each can be decoded or transcoded without data from another data unit, and corresponding pairs of self-contained data units in the first and second audio information represent the same underlying audio information,
receiving an error signal indicating transmission errors and omissions in the first audio information or detecting errors and omissions in the first audio information, and
providing an encoded audio output complying with said first type of digital audio coding by
- deriving the encoded audio output complying with the first type of digital audio coding from the first audio information when no error or omission is detected in the first audio information and
**characterized in that**
the providing provides by also transcoding the second audio information from the second type of audio coding to the first type of audio coding when an error or omission is detected in the first audio information.

2. A digital audio decoding method according to claim 1 wherein the providing includes
decoding one of the corresponding pair of self-contained data units from the first audio information and the second audio information in accordance with the error signal.

3. A digital audio decoding method according to claim 1 wherein
the second audio information represents the directional information in the underlying audio with less detail than the first audio information.

4. A digital audio decoding method according to claim 1 wherein
the providing provides the encoded audio output complying with the first type of digital audio coding in the form of an encoded bitstream, the encoded audio output bitstream having a data rate different from the data rate of the first audio information encoded bitstream.

5. A digital audio decoding method according to Claim 1 wherein
the first type of digital audio coding is AC-3 coding and
the second type of digital audio coding is a modified AC-3 coding.

6. A digital audio decoding method according to claim 1 wherein
the second coded audio information has a data rate lower than that of the first coded audio information.

7. A digital audio decoding method according to claim 1 wherein
said second audio information includes transcoding information usable in transcoding the second audio information and,
said transcoding uses said transcoding information.

8. A digital audio decoding method according to claim 1 wherein the transcoding comprises
partially decoding the second audio information; and
finishing the transcoding of the partially decoded second audio information.

9. A decoder of digital audio, comprising means adapted to perform the steps of the method of any one of the claims 1 to 8.

10. A machine-readable storage medium storing a program for causing a machine to implement the method of any one of claims 1 to 8.

## Patentansprüche

1. Digitales Audio-Decodierverfahren, das aufweist
Empfangen
- einer ersten Audioinformation, die mit einem ersten Typ einer digitalen Audiocodierung codiert ist, und
- einer zweiten Audioinformation, die mit einem zweiten Typ einer Audiocodierung codiert ist,
wobei die erste Audioinformation und die zweite Audioinformation eigenständige Dateneinheiten haben, d.h. Dateneinheiten, die ausreichend Information enthalten, so dass jede Dateneinheit ohne Daten von einer anderen Dateneinheit decodiert oder transcodiert werden kann, und entsprechende Paare von eigenständigen Dateneinheiten in der ersten und zweiten Audioinformation dieselbe zugrunde liegende Audioinformation repräsentieren,
Empfangen eines Fehlersignals, das Übertragungsfehler und Auslassungen in der ersten Audioinformation anzeigt oder Fehler und Auslassungen in der ersten Audioinformation erfasst, und
Liefern einer codierten Audioausgabe, die dem ersten Typ einer digitalen Audiocodierung entspricht, durch
- Ableiten der codierten Audioausgabe, die dem ersten Typ einer digitalen Audiocodierung entspricht, aus der ersten Audioinformation, wenn kein Fehler oder keine Auslassung in der ersten Audioinformation erfasst wird, und
**dadurch gekennzeichnet, dass**
das Liefern auch liefert durch Transcodieren der zweiten Audioinformation aus dem zweiten Typ einer Audiocodierung zu dem ersten Typ einer Audiocodierung, wenn ein Fehler oder eine Auslassung in der ersten Audioinformation erfasst wird.

2. Digitales Audio-Decodierverfahren gemäß Anspruch 1, wobei das Liefern umfasst ein Decodieren einer des entsprechenden Paares von eigenständigen Dateneinheiten aus der ersten Audioinformation und der zweiten Audioinformation in Übereinstimmung mit dem Fehlersignal.

3. Digitales Audio-Decodierverfahren gemäß Anspruch 1, wobei die zweite Audioinformation die Richtungsinformation in dem zugrunde liegenden Audio weniger detailliert repräsentiert als die erste Audioinformation.

4. Digitales Audio-Decodierverfahren gemäß Anspruch 1, wobei das Liefern die codierte Audioausgabe, die dem ersten Typ einer digitalen Audiocodierung entspricht, in der Form eines codierten Bitstroms liefert, wobei der codierte Audioausgabe-Bitstrom eine Datenrate hat, die verschieden ist zu der Datenrate des codierten Bitstroms der ersten Audioinformation.

5. Digitales Audio-Decodierverfahren gemäß Anspruch 1, wobei der erste Typ einer digitalen Audiocodierung eine AC-3-Codierung ist und der zweite Typ einer digitalen Audiocodierung eine modifizierte AC-3-Codierung ist.

6. Digitales Audio-Decodierverfahren gemäß Anspruch 1, wobei die zweite codierte Audioinformation eine Datenrate hat, die geringer ist als die der ersten codierten Audioinformation.

7. Digitales Audio-Decodierverfahren gemäß Anspruch 1, wobei die zweite Audioinformation eine Transcodierinformation umfasst, die bei einer Transcodierung der zweiten Audioinformation verwendbar ist, und das Transcodieren die Transcodierinformation verwendet.

8. Digitales Audio-Decodierverfahren gemäß Anspruch 1, wobei das Transcodieren aufweist ein teilweises Decodieren der zweiten Audioinformation; und Beenden des Transcodierens der teilweise decodierten zweiten Audioinformation.

9. Decodierer für digitales Audio, der Mittel aufweist, die ausgebildet sind zur Durchführung der Schritte des Verfahrens gemäß einem der Ansprüche 1 bis 8.

10. Maschinen-lesbares Speichermedium, das ein Programm speichert, um eine Maschine zu veranlassen, das Verfahren gemäß einem der Ansprüche 1 bis 8 zu implementieren.

## Revendications

1. Procédé de décodage audio numérique, comprenant :
- la réception :
- de premières informations audio codées avec un premier type de codage audio numérique et
- de secondes informations audio codées avec un second type de codage audio,
dans lequel les premières informations audio et les secondes informations audio ont des unités de données autonomes, c'est-à-dire des unités de données contenant des informations suffisantes pour que chacune puisse être décodée ou transcodée sans les données d'une autre unité de données, et des paires correspondantes d'unités de données autonomes dans les premières et les secondes informations audio représentent les mêmes informations audio initiales,
la réception d'un signal d'erreur indiquant les erreurs de transmission et les omissions dans les premières informations audio ou la détection d'erreurs et d'omissions dans les premières informations audio, et
la fourniture d'une sortie audio codée conforme au dit premier type de codage audio numérique en
- dérivant la sortie audio codée conforme au premier type de codage audio numérique issu des premières informations audio lorsque aucune erreur ou omission n'est détectée dans les premières informations audio, et
**caractérisé en ce que** :
la fourniture prévoit également le transcodage des secondes informations audio du second type de codage audio dans le premier type de codage audio lorsque une erreur ou une omission est détectée dans les premières informations audio.

2. Procédé de décodage audio numérique selon la revendication 1, dans lequel la fourniture inclut :
le décodage de l'une des paires correspondantes des unités de données autonomes issues des premières informations audio et des secondes informations audio selon le signal d'erreur.

3. Procédé de décodage audio numérique selon la revendication 1, dans lequel :
les secondes informations numériques représentent les informations directionnelles dans l'audio initial avec moins de détails que les premières informations audio.

4. Procédé de décodage audio numérique selon la revendication 1, dans lequel :
la fourniture prévoit que la sortie audio codée soit conforme au premier type de codage audio numérique sous la forme d'un train de bits codé, ledit train de bits de sortie audio codée ayant une cadence de transfert différente de la cadence de transfert du train de bits des premières informations audio codées.

5. Procédé de décodage audio numérique selon la revendication 1, dans lequel :
le premier type de codage audio numérique est le codage AC-3, et
le second type de codage audio numérique est un codage AC-3 modifié.

6. Procédé de décodage audio numérique selon la revendication 1, dans lequel :
les secondes informations audio codées ont une cadence de transfert inférieure à celle des premières informations audio codées.

7. Procédé de décodage audio numérique selon la revendication 1, dans lequel :
lesdites secondes informations incluent des informations de transcodage utilisables dans le transcodage des secondes informations audio et,
ledit transcodage utilise lesdites informations de transcodage.

8. Procédé de décodage audio numérique selon la revendication 1, dans lequel le transcodage comprend :
le décodage partiel des secondes informations audio ; et
l'achèvement du transcodage des secondes informations audio partiellement décodées.

9. Décodeur d'audio numérique comprenant un moyen conçu pour effectuer les étapes du procédé selon l'une quelconque des revendications 1 à 8.

10. Support de stockage lisible par une machine, stockant un programme destine à faire mettre en oeuvre le procédé selon l'une quelconque des revendications 1 à 8 par une machine.
